Europäisches Patentamt

(19) European Patent Office

Office européen des brevets

(11) Numéro de publication: **0 291 369**
**B1**

(12) **FASCICULE DE BREVET EUROPEEN**

(51) Int. Cl.⁵: **B62K 25/00**

(45) Date de publication du fascicule du brevet:
22.08.90

(21) Numéro de dépôt: **88400898.8**

(22) Date de dépôt: **14.04.88**

(54) Bras de support et de suspension d'une roue motrice.

(30) Priorité: **15.05.87 FR 8706824**

(43) Date de publication de la demande:
**17.11.88 Bulletin 88/46**

(45) Mention de la délivrance du brevet:
**22.08.90 Bulletin 90/34**

(84) Etats contractants désignés:
**DE GB IT**

(56) Documents cités:
**GB-A- 555 975**
**US-A- 4 526 249**
**US-A- 4 650 023**

(73) Titulaire: **ELF FRANCE, Société Anonyme dite:, Tour Elf 2 place de la Coupole La Défense 6, F-92400 Courbevoie(FR)**

(72) Inventeur: **Trema, Daniel, 31 rue du 15 Février, F-95870 Bezons(FR)**

(74) Mandataire: **Hirsch, Marc-Roger, Cabinet Hirsch 34 rue de Bassano, F-75008 Paris(FR)**

ACTORUM AG

## Description

La présente invention se rapporte à un bras de support et de suspension unique d'une roue motrice de véhicule montée d'un côté du bras et reliée au moins en rotation de l'autre côté du bras à une chaîne sans fin d'entraînement en rotation, ledit bras étant articulé sur le corps et notamment sur le châssis du véhicule par une partie de bras qui est disposée transversalement à la direction de déplacement du véhicule et est reliée par au moins deux paliers rotatifs à ce châssis.

De tels bras supports qui ont constitué d'abord une extension des réalisations automobiles courantes, commencent à être utilisés sur les motocycles pour supporter la roue arrière motrice de ces véhicules. Une première adaptation avantageuse au motocycle a consisté à disposer la roue arrière et le disque de frein d'un côté du bras tandis que la couronne ou le pignon de chaîne était placé de l'autre côté du bras ce qui permettait le démontage rapide de la roue et, le cas échéant, du disque de frein sans avoir à toucher au réglage de la chaîne.

Afin de réaliser des motocycles aptes à des vitesses élevées qui ont déjà pu dépasser 300 km/h sur les circuits de vitesse, il est nécessaire de réduire la vitesse de défilement de la chaîne et donc le diamètre du pignon ou de la couronne recevant la chaîne et solidaire en rotation de la roue. La réduction du diamètre du pignon récepteur de chaîne a pour conséquence une augmentation corrélative des efforts exercés sur la chaîne qui provoquent alors des contraintes exagérées de compression, de flambage, de flexion et de torsion sur le bras support de roue. A titre d'exemple, les dernières réalisations de motocycles de vitesse à bras unique ont permis de relever sur le bras des efforts de compression atteignant 2 200 daN. De tels efforts exigent que le bras soit réalisé sous la forme d'une poutre en caisson très résistante.

L'un des buts de la présente invention est précisément de permettre d'augmenter de façon importante l'inertie de la section du bras dans la zone où celui-ci est soumis aux contraintes maximales sans augmenter sensiblement la quantité de matière utilisée pour ce bras et donc le poids et le coût du bras.

A cet effet selon l'invention, le bras support de roue motrice du type mentionné au début présente dans la zone soumise au moment de flexion maximal avant au delà de la liaison avec la partie de bras disposée transversalement, une section dont l'enveloppe extérieure est traversée par au moins l'un des deux brins de la chaîne dans un canal de chaîne dont les parois participent à l'augmentation du moment d'inertie de la section du bras dans ladite zone soumise au moment de flexion maximal. Une partie des parois du canal de chîane peut ainsi être disposée de l'autre côté de la chaîne par rapport au centre de la section du bras avec un corps supplémentaire de la section du bras pour augmenter, de façon importante, l'inertie de la section de bras dans cette zone du bras soumise aux contraintes maximales.

La section transversale du canal du brin de chaîne est entourée par une section fermée limitant intérieurement le débattement du brin de chaîne dans toutes les directions, et relié extérieurement au profilé de la section du bras. La section fermée est avantageusement prolongée du côté opposé au centre de la section du bras par une section supplémentaire de bras destinée à augmenter localement l'inertie de la section du bras.

La section fermée entourant la section transversale du canal est de préférence réalisée dans le même matériau que le bras et sensiblement avec la même épaisseur de paroi que celui-ci pour être incluse dans l'ensemble monobloc du bras.

Selon un autre mode de réalisation de l'invention, la section fermée entourant la section transversale du canal est disposée en saillie importante au-dessus et/ou au-dessous de la section principale de profilé de bras, de forme générale annulaire carrée ou rectangulaire, de manière à majorer de façon significative l'inertie de la section du corps principal de profilé dans ladite zone soumise au moment de flexion maximal.

Selon un autre mode de réalisation de l'invention améliorant le guidage de la chaîne, la face du canal de chaîne située du côté de la section principale est sensiblement plane et se raccorde avec des faces sensiblement planes ménagées sur la partie voisine du corps de bras pour constituer un guide longitudinal du battement du brin de la chaîne traversant le canal de chaîne. Afin de protéger de l'usure les parois intérieures du canal de chaîne ainsi que la chaîne, le guide longitudinal du brin de chaîne est recouvert au moins partiellement et au moins à la traversée du canal de chaîne d'une couche en un matériau de bonne qualité frottante, tel que de la matière plastique, et il en est de même, le cas échéant, des autre faces du canal de chaîne.

D'autres buts, avantages et caractéristiques apparaîtront à la lecture de la description d'un mode de réalisation de l'invention, faite à titre non limitatif et en regard du dessin annexé dans lequel:

- la figure 1 est une vue en coupe longitudinale selon la ligne I-I de la figure 2, c'est-à-dire selon le plan de chaîne, d'un bras de support de roue motrice de motocycle selon l'invention;
- la figure 2 est une vue de dessus du bras support représenté à la figure 1 accompagné du moteur en vue fragmentaire de dessus et de la roue motrice en vue fragmentaire coupée;
- la figure 3 est une vue en coupe selon la ligne III-III de la figure 2, de la section du bras dans la zone critique soumise au moment de flexion maximale et traversée par la chaîne motrice;
- la figure 4 est une vue en coupe selon la ligne IV-IV de la figure 1, de la section transversale du bras dans sa partie disposée transversalement à la direction de déplacement du motocycle.

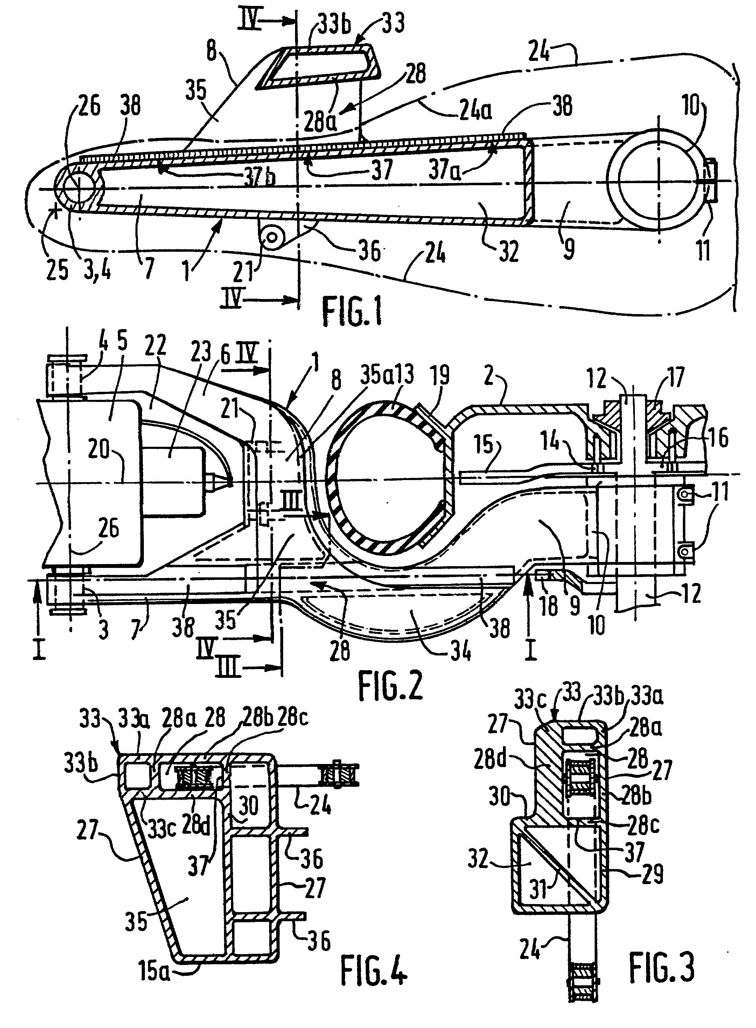

Si l'on se reporte à la figure 2, on voit que le bras support 1 de la roue arrière motrice 2 d'un motocycle est articulé sur des paliers 3 et 4 sur le châssis 5 du motocycle constitué, le cas échéant, par le carter moteur du motocycle. Cette articulation s'effectue par l'intermédiaire de deux branches de fourche 6 et 7 qui sont reliées l'une à l'autre par une partie de bras transversale 8 d'où part le bras unique proprement dit 9 à section résistante en caisson et qui se termine par une couronne de palier de roue 10 de grande section venant serrer par pincement de deux brides 11, de robustes paliers à roulement, non représentés, de guidage d'un axe de roue 12.

La roue 2 qui porte à sa périphérie un bandage pneumatique 13 est reliée à l'axe de roue 12 d'un côté du bras unique 9, par exemple à l'aide d'une couronne de vis 14 vissées dans le moyeu de la roue et dont les têtes sont intercalées entre les cannelures d'un disque de frein 15 et celles d'un flasque 16 de l'axe de roue 12. La roue 2 est serrée par un écrou 17 à tête conique sur le flasque 16 tandis qu'une couronne dentée ou un pignon de chaîne 18 est fixée sur l'axe 12, de façon non représentée, de l'autre côté du bras unique 9.

Comme on le voit sur la figure 2, à son départ de la partie de bras transversale 8, le bras unique 9 entoure partiellement le bandage pneumatique 13 et la jante 19 de la roue 2 dont la bande de roulement et le disque de frein 15 viennent se placer sur l'axe 20 médian entre les deux paliers 3 et 4 et qui constitue le plan axial médian du motocycle.

La suspension du bras 1 par rapport au châssis du motocycle est réalisée par l'intermédiaire d'une timonerie ou berceau de suspension non représenté, et qui vient s'accrocher sur des paliers supports inférieurs 21 du bras (voir la figure 1). Au cours de son débattement de suspension, le bras 1 tourne autour des paliers 3 et 4 en entourant l'espace libre 22 ménagé entre les branches de fourche 6 et 7 et dans lequel vient faire saillie une partie du moteur 5, telle qu'un cylindre 23.

La roue 2 est entraînée en rotation par une chaîne sans fin 24 dont seule la ligne médiane est représentée à la figure 1 au cours d'une variation d'effort moteur ou résistant faisant fouetter la chaîne. La chaîne 24 entourant le pignon moteur non représenté, est reliée mécaniquement au moteur du motocycle par ce pignon moteur dont l'axe 25 est légèrement décalé par rapport à l'axe 26 des paliers 3 et 4 d'articulation du bras 1. L'axe 25 est représenté ici reculé du côté du moteur, légèrement en-dessous de l'axe 26, de manière à fournir une réaction de chaîne au débattement du bras de suspension 1. Le pignon récepteur ou pignon de roue 18 est également entouré par la chaîne 24 et présente ici un diamètre trois fois et demi plus faible que celui de la bande de roulement du bandage pneumatique 13 dilaté par la force centrifuge, ce rapport pouvant atteindre des valeurs plus considérables qui conduisent à des efforts de traction ou de retenue très importants exercés sur la chaîne et transmis au bras unique 9 par l'axe de roue 12.

Afin de résister aux efforts très importants exercés par la chaîne 24 et également par le disque de frein 15 au cours du freinage, ces efforts étant transmis au bras unique 9 par l'axe de roue 12, le bras 9 doit présenter en section, surtout à son raccordement à la partie de bras transversal 8 de plus forte section, une inertie importante ou bien doit être réalisé en un matériau présentant une grande résistance aux contraintes. Les modes de réalisation possibles pour le bras 1 et notamment sa partie de bras unique 9 (fonderie, soudure, enroulement filamentaire et enrobage, etc.) ne permettent qu'un choix restreint de matériaux relativement légers et aisés à mettre en oeuvre qui présentent tous une résistance assez moyenne aux contraintes exercées, et obligent donc à augmenter l'inertie de la section du bras unique 9 présentant la forme générale d'un caisson.

Selon l'invention, le bras de support et de suspension 1 présente, dans la zone de raccordement du bras unique 9 à la partie de bras transversal 8 et qui est donc soumise au moment de flexion maximal, une section dont l'enveloppe extérieure 27 (voir les coupes des figures 3 et 4) est traversée par au moins l'un des brins haut 24a ou bas 24b de la chaîne 24 dans un canal de chaîne 28. Les parois 28a, 28b, 28c, 28d du canal de chaîne 28 servent non seulement à guider la chaîne 24 mais elles sont agencées et reliées aux autres parties de la section du bras 1 de manière à participer à l'augmentation de l'inertie de la section de ce bras. Les parois du canal 28 constituent en section un tube à section fermée sur elle-même qui limite le débattement de chaîne dans toutes les directions et qui est relié extérieurement aux diverses autres parois, telles que 29, 30 et 31 de la section du bras.

Afin d'augmenter encore plus nettement l'inertie de résistance à la flexion et à la torsion de la section du bras 1, le tube fermé en section et entourant le canal de chaîne 28 est prolongé du côté opposé au centre de la section du bras unique 9, c'est-à-dire du côté opposé au caisson 32 du bras unique 9, par un corps supplémentaire 33 de section de bras. Ce corps supplémentaire 33 présente par exemple une section en U, constituée de trois parois 33a, 33b et 33c qui forment avec la paroi 28a une enveloppe tubulaire rectangulaire en caisson qui surmonte la chaîne 24 et se prolonge en direction de l'axe de roue 12 par un caisson latéral 34 de renforcement du bras unique 9 dans la zone entourant latéralement le bandage pneumatique 13 et la jante de roue 19, et où se développent encore, en plus des contraintes de torsion, des contraintes de flexion importantes.

Du côté de la branche de fourche 6, l'enveloppe tubulaire en caisson du corps supplémentaire 33 se prolonge par un caisson transversal 35 (voir les figures 1 et 4) relativement haut et d'inertie importante, apte à résister à la partie des efforts de flexion et de torsion transmise au palier 4.

On voit sur la coupe de la figure 3 que les raccords de parois 28d et 33c du canal de chaîne 28 et de l'enveloppe du caisson du corps 33 avec la paroi 35a du caisson 35 (voir la figure 2, présentent une section plus importante en biais que l'épaisseur normale des parois de la section du profilé du bras 1. Dans le mode de réalisation représenté sur les figures, le bras 1 est constitué à partir d'une pièce monobloc obtenue par fonderie, de préférence en alliage d'aluminium ou de magnésium, et les parois du canal de chaîne 28 sont réalisées dans le même matériau que le bras, on prévoit sensiblement les mêmes épaisseurs de paroi pour toutes les parois, une surépaisseur pouvant exister uniquement dans le cas des coupes biaises de ces parois ou sur les arrondis de raccordement de paroi.

Les coupes représentées sur les figures 3 et 4 font apparaître les section des différentes parties intermédiaires 6, 7, 8, 9 du bras 1 qui présentent toutes une structure en caisson. Dans le bras unique 9, le caisson 32 présente une forme générale sensiblement carrée, avec une paroi transversale de renforcement 31. Les caissons 34 et 35 ainsi que le tube à section annulaire 28a, 28b, 28c, 28d qui entoure le canal de chaîne 28 font saillie de façon importante au-dessus du caisson 32 et majorent ainsi de façon considérable l'inertie de résistance à la flexion ou à la torsion de la section du caisson 32 de corps principal de bras unique 9. La partie de bras transversal 8 présente en coupe transversale (selon le plan de coupe de la figure 4) une forme générale trapézoïdale ou en rectangle tronqué qui est encore renforcée par les nervures 36 de soutien des paliers inférieurs de suspension 21.

La face inférieure 37 du canal de chaîne 28 est sensiblement plane dans le sens axial de la chaîne et elle se prolonge et se raccorde, à la sortie du canal de chaîne, comme on le voit sur la figure 1, par des faces sensiblement planes 37a et 37b ménagées à la partie supérieure extérieure du caisson 32 constituant l'âme du bras unique 9 prolongé vers le palier 3 par la branche de fourche 7. Ces parties planes 37, 37a et 37b peuvent ainsi constituer un guide de chaîne bas lorsque le brin supérieur 24a de la chaîne bat, au cours d'une inversion de couple moteur par exemple, et comme représenté à la figure 1. Pour éviter la dégradation des surfaces 37, 37a et 37b ainsi que de la chaîne 24 après une utilisation prolongée du motocycle, ces surfaces sont recouvertes au moins partiellement ou de place en place par des plaques de matière plastique 38 à bas coefficient de frottement et bonne résistance à l'abrasion. De telles plaques d'usure et de frottement peuvent être appliquées également sur les autres faces intérieures du canal de chaîne 28 afin de faire face à un débattement ou à une dérive latérale ou vers le haut de la chaîne 24 dont la tension peut être réglée par rotation d'un excentrique prévu soit sur l'axe 26 des paliers 3, 4, soit à l'intérieur de la couronne de palier de roue 10.

Le fonctionnement du bras de support 1 qui vient d'être décrit se déduit des figures. En fonction de la charge transmise par le châssis 5 du motocycle, le bras 1 tourne plus ou moins autour des paliers 3 et 4 en laissant s'abaisser ces derniers en cas de surcharge et en comprimant un ressort de suspension généralement associé à un amortisseur. La chaîne 24 est passée à l'état ouvert à travers le canal de chaîne 28 et autour des pignons moteur et récepteur 18 puis est fermée sur elle-même par sertissage ou agrafage des derniers maillons. Sa tension est réglée par rotation des excentriques de paliers ou de roue.

Les efforts de traction exercés par le brin supérieur 24a de la chaîne au cours de l'entraînement du motocycle ou bien exercés par le brin inférieur 24b au cours du freinage sur le frein moteur, se transmettent du pignon récepteur 18 à l'axe de roue 12 et de là à la couronne de palier 10 à l'extrémité du bras unique 9. Ces efforts très importants qui peuvent atteindre plus de dix fois la charge normale exercée sur la roue 2 provoquent sur le bras unique 9 une série de contraintes complexes:
- de torsion du caisson 32,
- de flexion excentrée du caisson 32,
- de compression axiale excentrée de ce caisson induisant un flambage.

Si à section restant constante du caisson, les contraintes de torsion restent constantes, il n'en est pas de même des contraintes de flexion qui augmentent au fur et à mesure que le porte à faux du bras unique 9 s'accroît. L'augmentation des contraintes de flexion est empêchée par le développement progressif du caisson latéral 34 puis des parois entourant le canal de chaîne 28 jusqu'au transfert des efforts de flexion, de torsion et de compression sur les deux branches de fourche 6 et 7 via le renforcement de paroi autour du canal de chaîne 28 et la partie de bras transversal 8 à armatures et nervures inférieures représentée en section à la figure 4.

Le bras selon l'invention se révèle tout en étant très léger, faire preuve d'une extraordinaire résistance aux contraintes multiples exercées, grâce à l'inertie élevée de résistance à la flexion et à la torsion qu'il présente selon les diverses sections. De plus, le bras assure en service une excellente protection de la chaîne contre les agressions (projections) de roulage sans gêner son accessibilité à des fins d'inspection ou de contrôle, notamment de la tension de la chaîne.

Bien entendu, la présente invention n'est pas limitée aux modes de réalisations décrits et représentés et elle est susceptible de nombreuses variantes accessibles à l'homme de l'art sans que l'on ne s'écarte du cadre de l'invention comme précisé dans les revendications, notamment lorsque le bras est réalisé par soudure totale ou partielle ou bien par enroulement ou entrecroisement de fibres.

## Revendications

1.- Bras de support et de suspension unique cd'une roue motrice de véhicule montée d'un coté du bras et reliée au moins en rotation de l'autre côté du bras à une chaîne sans fin d'entraînement en rotation, ledit bras étant articulé sur le corps du véhicule par une partie de bras qui est disposée transversalement à la direction de déplacement du véhicule et est reliée par au moins deux paliers rotatifs à ce châssis, caractérisé en ce qu'il présente, dans la zone soumise au moment de flexion maximal au delà de la liaison avec la partie de bras (8) disposée transversalement par rapport au corps du véhicule, une section dont l'enveloppe extérieure (27) est traversée par au moins l'un des deux brins (24a, 24b) de la chaîne (24) dans un canal de chaîne (28) dont les parois (28a, 28b, 28c, 28d) participent à l'augmentation du moment d'inertie de la section du bras (1) dans ladite zone soumise au moment de flexion maximal.

2.- Bras de support selon la revendication 1, caractérisé en ce que la section transversale du canal (28) du brin de chaîne (24a, 24b) est entourée par une section annulaire fermée limitant intérieurement le débattement du brin de chaîne dans toutes les directions et reliée extérieurement au profilé de la section du bras (1).

3.- Bras de support selon la revendication 2, caractérisé en ce que la section annulaire fermée est prolongée, du côté opposé au centre de la section du bras par une section supplémentaire (33) de bras destinée à augmenter localement le moment d'inertie de la section du bras (1).

4.- Bras de support selon la revendication 2 ou 3, caractérisé en ce que la section fermée entourant la section transversale du canal de chaîne (28) est réalisée dans le même matériau que le bras (1) et sensiblement avec la même épaisseur de paroi que celui-ci, pour être incluse dans l'ensemble monobloc du bras.

5.- Bras de support selon l'une des revendications 2 à 4, caractérisé en ce que la section fermée entourant la section transversale du canal de chaîne (28) est disposée en saillie importante au-dessus et/ou au-dessous de la section principale (32) de profilé de bras, de forme générale carrée ou rectangulaire, de manière à majorer de façon significative le moment d'inertie de la section du corps principal de profilé dans ladite zone soumise au moment de flexion maximal.

6.- Bras de support selon l'une des revendications 1 à 5, caractérisé en ce que la face (37) du canal de chaîne (28) située du coté de la section principale (32) est sensiblement plane et se raccorde avec des faces (37a, 37b) sensiblement planes, ménagées sur la partie voisine du corps de bras, pour constituer un guide longitudinal du brin (24a, 24b) de la chaîne (24) traversant le canal de chaîne (28).

7.- Bras de support selon la revendication 6, caractérisé en ce que le guide longitudinal (37, 37a, 37b) du brin de chaîne (24a, 24b) est recouvert au moins partiellement et au moins à la traversée du canal de chaîne (28) d'une couche (38) en un matériau de bonne qualité frottante, tel que de la matière plastique.

8.- Bras de support selon l'une des revendications 1 à 7, caractérisé en ce que les faces du canal de chaîne (28) sont recouvertes au moins partiellement d'un matériau de bonne qualité frottante, tel que de la matière plastique.

**Patentansprüche**

1. Einziger Trag- und Aufhängungsarm eines Fahrzeugantriebsrads welches auf einer Seite des Armes angebracht ist und zumindest in Drehbewegung mit einer an der anderen Seite des Armes angebrachten endlosen Drehantriebskette verbunden ist, wobei der Arm durch einen Armteil, welcher quer zur Fahrtrichtung angebracht ist, an den Körper des Fahrzeugs angelenkt und durch wenigstens zwei Drehungslager mit diesem Fahrgestell verbunden ist, dadurch gekennzeichnet, dass er in der dem maximalen Biegungsmoment unterliegenden Zone jenseits der Verbindung des dem mit quer zu dem Körper des Fahrzeugs angebrachten Armteils (8) einen Schnitt aufweist, deren äussere Umhüllung (27) von wenigstens einem der zwei Stränge (24a, 24b) der Kette (24) in einem Kettenführungskanal (28) durchdrungen ist, dessen Wandungen (28a, 28b, 28c, 28d,) zur Erhöhung des Trägheitsmoments des Armschnitts (1) in der dem maximalen Biegungsmoment unterlegenen Zone beitragen.

2. Tragarm nach Anspruch 1, dadurch gekennzeichnet, dass der Querschnitt des Kettenstrangkanals (28) von einem geschlossenen Schnitt umgeben ist, welcher das Ausschlagen des Kettenstrangs in alle Richtungen im Inneren begrenzt und der aussen mit dem Profil des Armschnitts (1) verbunden ist.

3. Tragarm nach Anspruch 2, dadurch gekennzeichnet, dass der geschlossene Schnitt auf der dem Zentrum des Armschnitts entgegengesetzten Seite durch einen zusätzlichen Armschnitt (33) verlängert ist um den Trägheitsmoment des Armschnitts (1) örtlich zu erhöhen.

4. Tragarm gemäss Anspruch 2 oder 3, dadurch gekennzeichnet, dass der den Querschnitt des Kettenführungskanals (28) umgebende geschlossene Schnitt aus dem gleichen Material wie der Arm (1) besteht und im wesentlichen die gleiche Wandungsdicke hat wie dieser, um in dem Einblockarm eingeschlossen zu sein.

5. Tragarm nach einem der Ansprüche 2–4, dadurch gekennzeichnet, dass der den Querschnitt des Kettenführungskanals (28) umgebende geschlossene Schnitt stark vorstehend auf und/oder unter dem Hauptschnitt des Armprofils angebracht ist, welcher eine im allgemeinen quadratische oder rechteckige Form hat, derart dass der Trägheitsmoment des Hauptkörperschnitts des Profils in der dem maximalen Biegungsmoment unterlegenen Zone beträchtlich erhöht wird.

6. Tragarm nach einem der Ansprüche 1–5, dadurch gekennzeichnet, dass die neben dem Hauptschnitt (32) liegende Seite (37) des Kettenführungskanals (28) im wesentlichen flach ist und mit den auf dem angrenzenden Teil des Armkörpers angebrachten im wesentlichen flachen Seiten (37a, 37b) fluchtet, um einen Längslenker des Kettenstrangs (24a, 24b), welcher den Kettenführungskanal (28) durchdringt, zu bilden.

7. Tragarm nach Anspruch 6, dadurch gekennzeichnet, dass der Längslenker (37, 37a, 37b) des Kettenstrangs (24a, 24b) wenigstens teilweise und wenigstens bei der Durchquerung des Kettenführungskanals (28) mit einer Schicht (38) aus einem reibungslosen Material, wie Kunststoff, bedeckt ist.

8. Tragarm nach einem der Ansprüche 1–7, dadurch gekennzeichnet, dass die Seiten des Kettenführungskanals (28) wenigstens teilweise mit einem reibungslosen Material, wie Kunststoff, bedeckt sind.

**Claims**

1. Carrier and suspension single arm for a vehicle driving wheel mounted at one side of the arm and at least rotationally connected at the other side of the arm to an endless rotational driving chain, said arm being pivoted on the body of the vehicle by a portion of the arm which is transversally disposed with respect to the direction of movement of the vehicle and is linked by at least two rotation bearings to this chassis, characterized in that it has, in the region subject to the maximum bending moment beyond the link with the portion of arm (8) transversally disposed with respect to the body of the vehicle, a section through the outer wall (27) of which at least one of the two runs (24a, 24b) of the chain (24) passes in a chain way or channel (28) the walls (28a, 28b, 28c, 28d) of which participate in increasing the moment of inertia of the section of the arm (1) in said region subject to the maximum bending moment.

2. Carrier arm according to claim 1, characterized in that the cross section of the way or channel (28) for a run of the chain (24a, 24b) is surrounded by a closed section internally limiting the to-and-fro movements of the run of chain in all directions and externally connected to the shaped contour of the section of the arm (1).

3. Carrier arm according to claim 2, characterized in that the closed section is extended at the side directed away from the centre of the section of arm by an additional arm section (33) adapted to locally increase the moment of inertia of the arm section (1).

4. Carrier arm according to claim 2 or 3, characterized in that the closed section surrounding the transverse section of the chain way or channel (28) is made up by the same material as the arm (1) and has substantially the same wall thickness as the latter, so as to be included in the integral one-piece arm.

5. Carrier arm according to one of claims 2–4, characterized in that the closed section surrounding the transverse section of the chain way or channel (28) is disposed so as to project by a substantial amount above and/or below the main section (32) of the contour of the arm, having a generally square or rectangular shape, whereby the moment of inertia of the section of the main body of the arm contour in said region subject to the maximum bending moment is significantly increased.

6. Carrier arm according to one of claims 1–5, characterized in that the face or side (37) of the chain way (28) located closest to the main section (32) is substantially plane and flush with faces or sides (37a, 37b) that are substantially plane and formed on the neighbouring portion of the arm body in order to constitute a longitudinal guide for the run (24a, 24b) of the chain (24) passing through the chain way or channel (28).

7. Carrier arm according to claim 6, characterized in that the longitudinal guide (37, 37a, 37b) of the chain run (24a, 24b) is covered at least partially and at least at the crossing of the chain way or channel (28) by a layer (38) made of a material having low friction characteristics such as a plastics material.

8. Carrier arm according to one of claims 1–7, characterized in that the sides of the chain way or channel (28) are covered at least partially by a material having low friction characteristics such as a plastics material.

FIG.1

FIG.2

FIG.4

FIG.3